# EUROPÄISCHE PATENTANMELDUNG

(11) **EP 0 990 558 A2**
(43) Veröffentlichungstag der Anmeldung: **05.04.2000**
(21) Anmeldenummer: 99890305.8
(22) Anmeldetag: 27.09.1999
(51) Int. Cl.: B60Q 1/10, B60Q 1/12

(54) **Kfz-Scheinwerfer**

(30) Priorität: 28.09.1998 AT 62898 U
(71) Anmelder: Zizala Lichtsysteme GmbH, A-3250 Wieselburg (AT)
(72) Erfinder: Aichinger, Michael Mag., 3620 Spitz (AT); Kammerer, Kurt, 3500 Krems (AT); Tiefenbacher, Ewald, 3373 Kemmelbach (AT); Wutzl, Gottfried, 3261 Steinakirchen (AT)
(74) Vertreter: Häupl, Armin, Dipl.-Ing.

(57) **Zusammenfassung**

Vorgeschlagen wird eine Abblendlicht/Fernlicht-Scheinwerfereinheit für ein Kraftfahrzeug, wobei eine Abblendlichtgruppe aus Reflektor, Lichtquelle, Strahlenblende und Projektionslinse mit einer Fernlichtgruppe aus Reflektor und Lichtquelle kombiniert ist, mit dem Kennzeichen, daß die kombinierte Einheit mit einer automatischen Leuchtweitenregulierung zum Verschwenken der kombinierten Einheit um einer horizontale Achse gekoppelt ist.

## Beschreibung

Die Erfindung betrifft eine Abblendlicht/Fernlicht-Scheinwerfereinheit für ein Kraftfahrzeug, wobei eine Abblendlichtgruppe aus Reflektor, Lichtquelle, Strahlenblende und Projektionslinse mit einer Fernlichtgruppe aus Reflektor und Lichtquelle kombiniert ist, mit dem Kennzeichen, daß die kombinierte Einheit mit einer automatischen Leuchtweitenregulierung zum Verschwenken der kombinierten Einheit um einer horizontale Achse gekoppelt ist.

Der Schwenkbereich der kombinierten Einheit zur Leuchtweitenregulierung ist z.B. 0,57° von der Horizontalebene nach unten für Country Light, 0,34° nach unten für Abllendlicht und in der Horizontalen für Fernlicht; automatische Gegenverkehrserfaßeinheiten, die mit Entfernungsmessung arbeiten, sind an sich bekannt und werden als adaptive cruise control units bezeichnet.

Bevorzugt ist dabei, daß die Abblendlichtgruppe in der kombinierten Einheit um eine Vertikalachse verschwenkbar ist. Auf diese Weise kann mit der Abblendlichtgruppe die Kurvenausleuchtung erfolgen, wobei die Verschwenkung von Scheinwerfern in Abhängigkeit vom Kurvenradius, beispielsweise radeinschlagabhängig, bekannt ist.

Als Alternative dazu oder gegebenenfalls zusätzlich kann vorgsehen sein, daß die Abblendlichtgruppe mit einer Kurvenlichtgruppe aus einem Zusatzreflektor mit zugeordnetem Schwenkspiegel kombiniert ist, wobei der Zusatzreflektor Licht von der Abblendlichtquelle auf den Schwenkspiegel reflektiert und der Schwenkspiegel kurvenradiusabhängig angesteuert ist. Auf diese Weise kann in der Kurve ein weitaus breiteres Lichtbündel mit unveränderten Geradeausanteil und erhöhter kurveninnerer Lichtkonzentration erhalten werden.

Die Erfindung wird nachstehend anhand von zwei Ausführungsbeispielen unter Bezugnahme auf die Zeichnung näher beschrieben, in der Fig. 1 eine Stirnansicht, Fig. 2 ein Horizontalschnitt einer ersten Ausführungsform eines erfindungsgemäßen Scheinwerfers und Fig. 3 eine schaubildliche Schrägansicht von dessen Abblendlichtgruppe und Fernlichtgruppe ist sowie die Fig. 4 bis 6 entsprechende Darstellungen einer zweiten Ausführungsform sind. Gleiche Bauteile tragen gleiche Bezugszeichen.

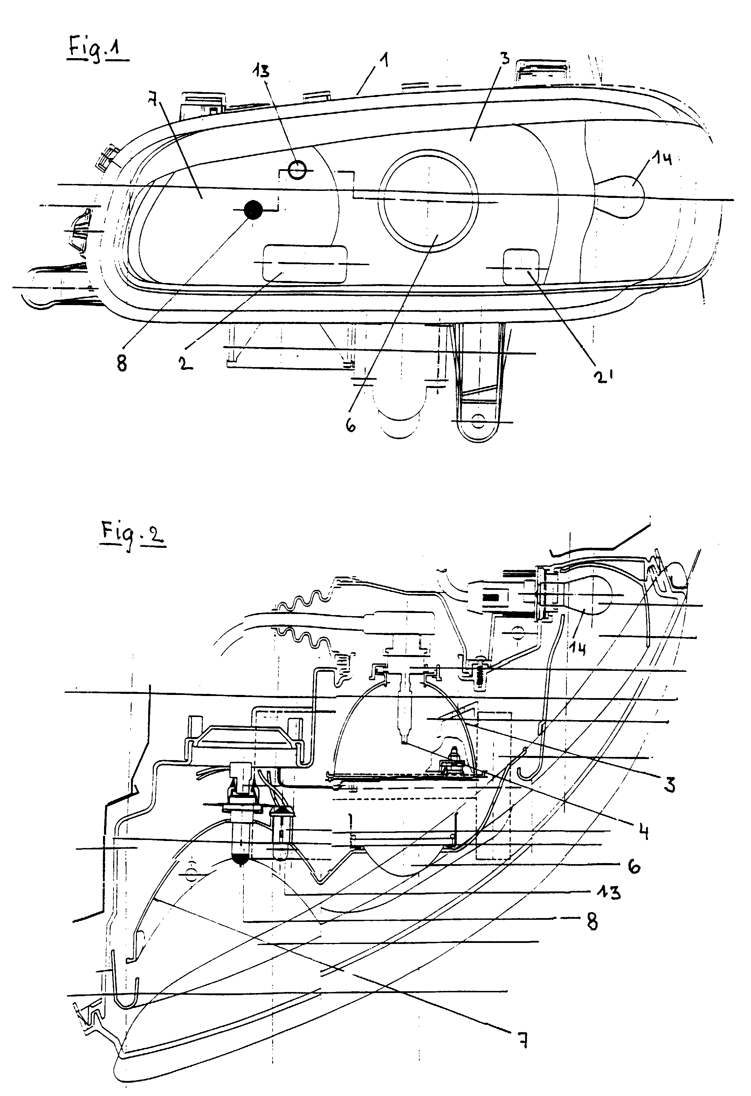

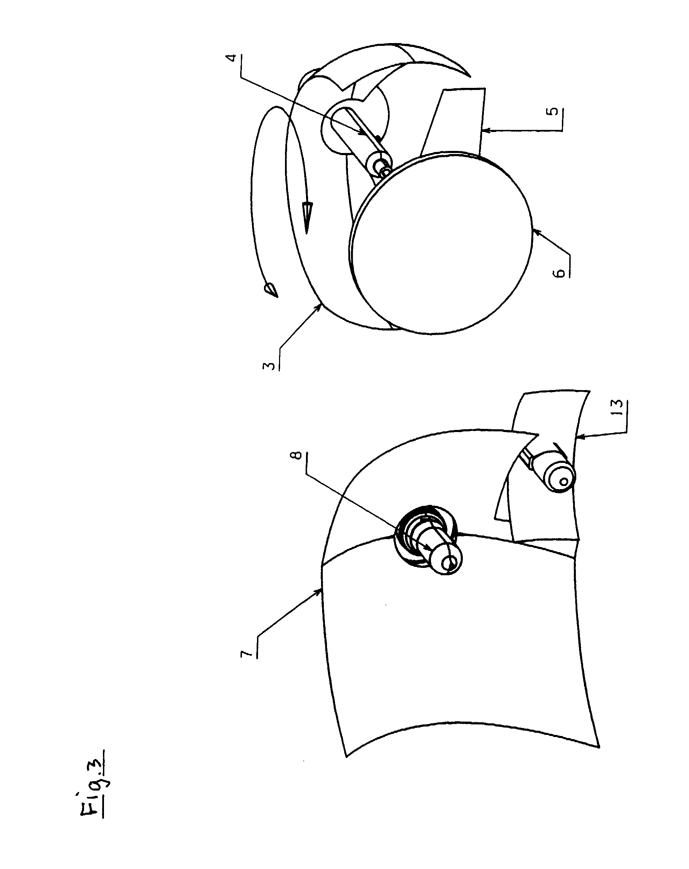

In einem Scheinwerfergehäuse 1 ist eine automatische Leuchtweitenregulierung 2 angeordnet (2 bezeichnet deren Entfernungsmesser, 2' deren Steuergerät) die eine kombinierte Einheit aus einer Abblendlichtgruppe und einer Fernlichtgruppe um eine horizontale Achse verschwenkt. Die Abblendlichtgruppe besteht aus Abblendlichtreflektor 3, Abblendlichtquelle 4, Blende 5 und Projektionslinse 6; die Fernlichtgruppe besteht aus Fernlichtreflektor 7 und Fernlichtquelle 8. Bei der Ausführungsform nach den Fig. 1 bis 3 ist die Abblendlichtgruppe 3 bis 6 um eine vertikale Achse horizontal verschwenkbar.

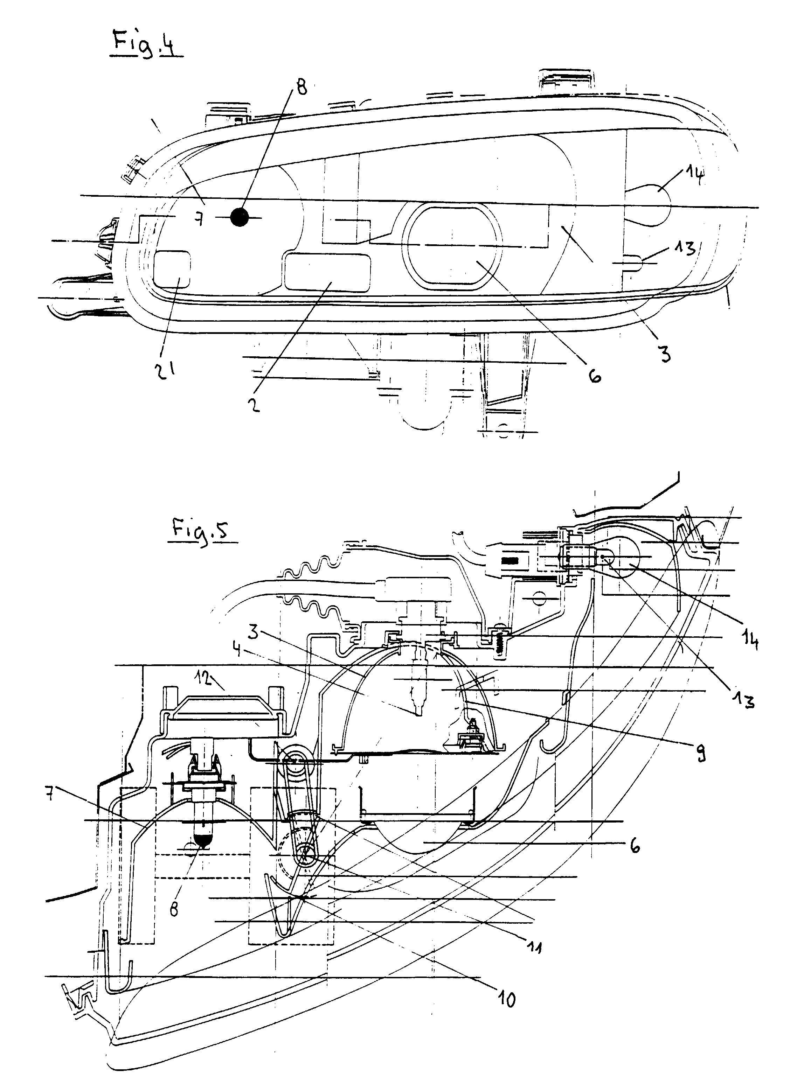

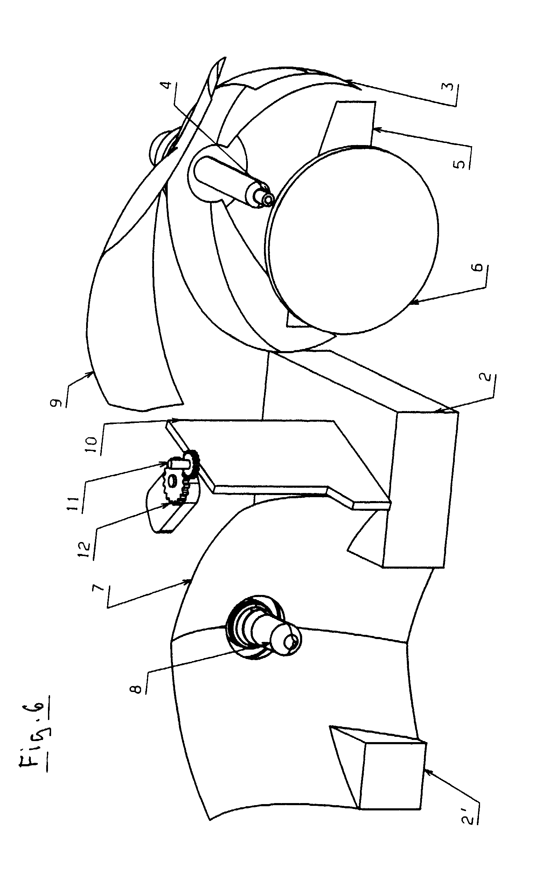

Bei der Ausführungsform nach den Fig. 4 bis 6 ist die Abblendlichtgruppe 3 bis 6 unbeweglich, dafür aber mit einer Kurvenlichtgruppe kombiniert, die aus einem Zusatzreflektor 9 mit zugeordnetem Schwenkspiegel 10, besteht, die Licht von der Abblendlichtquelle 4 erhalten und wobei der Schwenkspiegel 10 kurvenradiusabhängig um eine Vertikalachse 11 schwenkbar ist. In Fig. 6 ist der Antrieb für den Schwenkspiegel 10 mit 12 bezeichnet.

Bei den beiden Ausführungsformen bezeichnet jeweils 13 das Begrenzungslicht und 14 die Richtungsanzeige.

Die Abblendlichtgruppe ist zweckmäßig mit einer D2S oder D2R Lichtquelle, die Fernlichtgruppe mit einer H7 Lichtquelle ausgerüstet. Gegebenenfalls kann ein kleiner Zusatzreflektor zum Erkennen von Überkopfstraßenbeschilderungen vorgesehen sein, der oberhalb des Gegenverkehrblendbereichs abstrahlt.

## Patentansprüche

1. Abblendlicht/Fernlicht-Scheinwerfereinheit für ein Kraftfahrzeug, wobei eine Abblendlichtgruppe aus Reflektor, Lichtquelle, Strahlenblende und Projektionslinse mit einer Fernlichtgruppe aus Reflektor und Lichtquelle kombiniert ist, dadurch gekennzeichnet, daß die kombinierte Einheit mit einer automatischen Leuchtweitenregulierung zum Verschwenken der kombinierten Einheit um einer horizontale Achse gekoppelt ist.

2. Abblendlicht/Fernlicht-Scheinwerfereinheit nach Anspruch 1, dadurch gekennzeichnet, daß die Abblendlichtgruppe in der kombinierten Einheit um eine Vertikalachse verschwenkbar ist.

3. Abblendlicht/Fernlicht-Scheinwerfereinheit nach Anspruch 1 oder 2, dadurch gekennzeichnet, daß die Abblendlichtgruppe mit einer Kurvenlichtgruppe aus einem Zusatzreflektor mit zugeordnetem Schwenkspiegel kombiniert ist, wobei der Zusatzreflektor Licht von der Abblendlichtquelle auf den Schwenkspiegel reflektiert und der Schwenkspiegel kurvenradiusabhängig angesteuert ist.
